# EUROPÄISCHE PATENTANMELDUNG

(11) **EP 3 018 638 A1**
(43) Veröffentlichungstag der Anmeldung: **11.05.2016**
(21) Anmeldenummer: 14192238.5
(22) Anmeldetag: 07.11.2014
(51) Int. Cl.: G07F 19/00

(54) **Verfahren zur Erkennung außergewöhnlicher Betriebszustände in einer selbstbedienten Einrichtung**

(71) Anmelder: Scheidt & Bachmann GmbH, 41238 Mönchengladbach (DE)
(72) Erfinder: Miller, Norbert, Dr., 41063 Mönchengladbach (DE); Claßen, Dieter, 41235 Korschenbroich (DE); Heilmann, Oliver, 41236 Mönchengladbach (DE)
(74) Vertreter: Stenger Watzke Ring

(57) **Zusammenfassung**

Die Erfindung betrifft ein Verfahren zur Erkennung außergewöhnlicher Betriebszustände einer sensorisch nicht überwachten ersten Baugruppe in einer selbstbedienten Einrichtung, mittels einer Sensorik einer mit der ersten Baugruppe in einem Wirkzusammenhang stehenden zweiten Baugruppe und mittels eines Rechners,
- wobei Sensorsignale der zweiten Baugruppe gemessen und in digitale Sensordaten transformiert werden,
- wobei die Sensordaten zeitbezogen gespeichert werden,
- wobei die Sensordaten an den Rechner übermittelt werden,
- wobei der Rechner die übermittelten Sensordaten auswertet und daraus wenigstens eine Kennzahl für den Betriebszustand der überwachten, zweiten Baugruppe ermittelt,
- wobei der Rechner die Kennzahl der überwachten, zweiten Baugruppe mit einem Referenzwert vergleicht und
- wobei der Rechner bei einer Abweichung der Kennzahl von dem Referenzwert um wenigstens einen vorgebbaren Schwellwert einen außergewöhnlichen Betriebszustand der nicht überwachten, zweiten Baugruppefeststellt.

## Beschreibung

Die vorliegende Erfindung betrifft ein Verfahren zur Erkennung außergewöhnlicher Betriebszustände einer nicht sensorisch überwachten Baugruppe in einer selbstbedienten Einrichtung.

Insbesondere richtet sich die Erfindung auf die Erkennung solcher Betriebszustände in sogenannten selbstbedienten Verkaufs-, Annahme- oder Zugangskontrolleinrichtungen.

Selbstbediente Verkaufseinrichtungen umfassen Verkaufsautomaten im weitesten Sinne, wie zum Beispiel Automaten für den Verkauf von Fahrausweisen, Automaten für das Bezahlen von Parkscheinen in Parkhäusern oder auf Parkplätzen, Parkuhren, Tankautomaten, Zapfsäulen, Getränke-, Zigaretten- und andere Warenverkaufsautomaten, Anlagen zur Ausgabe von Textilien in chemischen Reinigungen, selbstbediente Bezahl- und Steuerungsanlagen für Fahrzeug-Waschanlagen, für Waschmaschinen, für Staubsauger usw.

Selbstbediente Annahmeeinrichtungen umfassen Automaten zur Annahme von Gegenständen - häufig gegen Ausgabe eines Pfandbetrages - wie zum Beispiel Glas- oder Plastikflaschen, Sondermüll wie Öldosen, Lackdosen u.ä., Anlagen zur Annahme von Textilien in chemischen Reinigungen, etc.

Selbstbediente Zugangskontrolleinrichtungen umfassen Zugangskontrollen für den öffentlichen Personenverkehr, für Sport-, Freizeit-, Unterhaltungs- und Kulturbetriebe, Zu- und Ausfahrtskontrolleinrichtungen für Parkhäuser und Parkplätze sowie für Zugangskontrollen für nicht-öffentliche Bereiche wie Firmen- und Behördengelände, sicherheits- und/oder geheimhaltungsrelevante Einrichtungen.

Sprachlich verkürzend und vereinfachend werden diese selbstbedienten Verkaufs-, Annahme- oder Zugangskontrolleinrichtungen in der vorliegenden Beschreibung als "selbstbediente Einrichtungen" bezeichnet.

Im Stand der Technik verfügen selbstbediente Einrichtungen über technische Mittel zur Selbstüberwachung und können mit diesen Mitteln detektierbare Störungen an einen Zentralrechner melden. Ein solches technisches Mittel ist zum Beispiel ein Erschütterungssensor, mit dem ein Automat einen Einbruchsversuch detektiert.

Wenn die selbstbedienten Einrichtungen über ein Datennetzwerk mit einem Zentralrechner verbunden sind, dann verfügen diese selbstbedienten Einrichtungen typischerweise auch über technische Mittel, mit denen sie sich selbst überwachen und eine etwaige Betriebsstörung als Datendialog über das Netzwerk an einen Zentralrechner melden. So kann z.B. ein Einbruchsversuch, der von Sensoren innerhalb der Einrichtung detektiert wird, als Datendialog über das Datennetzwerk an den Zentralrechner gemeldet werden. In gleicher Weise werden zum Beispiel Türkontaktschalter verwendet, um das Öffnen einer Automatentür festzustellen, oder Folien zum Detektieren des Einsatzes von Bohr- und Schneidwerkzeugen, aber zum Beispiel auch Papiermangelsensoren, mit deren Hilfe ein Fahrausweisautomat feststellt, dass Fahrscheinpapier nachgeladen werden muss, und dies als Datendialog an den Zentralrechner meldet. Weiter ist es üblich, dass ein Verkaufsautomat durch Zählen von eingenommenen Münzen nachhält, wie viele Münzen sich in der Münzkasse befinden, und eine Meldung über das Netzwerk an den Zentralrechner sendet, wenn die Münzkasse geleert werden muss; gleiches gilt in analoger Weise für die Banknotenkasse.

Die geschilderten technischen Mittel, mit welchen die selbstbedienten Einrichtungen sich selbst überwachen, sind jedoch häufig nicht geeignet, solche außergewöhnlichen Betriebszustände festzustellen, welche durch Alterung, Verschleiß, Verdreckung, Ablagerungen, Manipulation, Vandalismus oder auch einfach scherzhaft verursacht sind. Die fehlende Eignung bestimmter Fehlerzustände zur sensorischen Erfassung liegt zum einen darin, dass schon aus wirtschaftlichen Gründen nicht alle erdenklichen Sensoren in die Einrichtungen eingebaut werden, zum anderen jedoch, dass nicht alle Fehlerzustände sensorisch detektierbare Ursachen haben.

Im Folgenden werden einige Beispiele zur Veranschaulichung aufgeführt: Bei den beschriebenen Fehlerzuständen handelt es sich in erster Linie um Hardwarestörungen, welche durch Gebrauch oder Alterung der Einrichtung schleichend einsetzen oder welche durch Manipulation verursacht werden.

So kann ein Kraftstofffilter, welcher zwischen dem Erdtank und der Zapfsäule an einer Tankstelle eingesetzt ist, langsam verdrecken und damit verstopfen und sollte deswegen rechtzeitig gereinigt werden. Sensorisch detektierbar wäre dieser Vorgang zum Beispiel durch einen erhöhten Druckabfall über dem Filter, dafür müssten jedoch aufwändig explosionsgeschützte Drucksensoren in die Kraftstoffleitungen eingebaut werden, was in aller Regel nicht geschieht.

Auch kann - in welcher Absicht auch immer - jemand ein "Außer Betrieb"-Schild an einem Verkaufsautomaten anbringen, obwohl der Automat voll funktionsfähig ist. Ein solcher Zustand ist nicht technisch verursacht und wird naturgemäß vom Automaten nicht sensorisch (z.B. kameratechnisch) überwacht.

Weiterhin kann jemand einen Kaugummi in den Bank- und Kreditkartenschlitz eines Verkaufsautomaten stecken, so dass keine Kartenzahlungen mehr möglich sind. In der Regel ist die Öffnung der Kartenschlitze nicht direkt sensorisch überwacht, so dass die Manipulation nicht erkannt wird.

Ein Kartenleser eines Verkaufsautomaten kann mit der Zeit so verschmutzen, dass er immer weniger bis keine oder nur noch bestimmte Karten lesen kann. Ein Fehler dieser Art wird aus Kostengründen in aller Regel nicht direkt sensorisch erfasst.

Jemand kann das PIN-Pad eines Verkaufsautomaten durch einen Aufkleber auf dem Display oder mutwillige Verschmutzung auf der Tastatur unbenutzbar machen. Auch diese Manipulation wird aktuell technisch nicht überwacht.

Die Hintergrundbeleuchtung eines Bildschirms kann defekt sein, so dass der Kunde einen Automaten nicht bedienen kann. Diese Störung wird aktuell nicht detektiert, führt aber zu einem Totalausfall des Automaten. Wenn die Bedienung des Automaten über einen berührungsempfindlichen Bildschirm erfolgt gilt Gleiches für den Ausfall des Touch Sensors.

Auch kann das Zapfventil einer Zapfsäule defekt sein oder fehlen, so dass das zugehörige Kraftstoffprodukt nicht mehr getankt werden kann. Auch das ist ein Fehler, der aktuell (aus Kostengründen) nicht sensorisch erfasst wird.

Die fehlende Feststellbarkeit eines außergewöhnlichen Betriebszustands ist naturgemäß dann besonders kritisch, wenn die betroffene selbstbediente Einrichtung über weite Zeiträume ohne direkte menschliche Überwachung betrieben wird; zum Beispiel ein Tankautomat an einer unbemannten Tankstelle.

Aus dem Stand der Technik sind zahlreiche Verfahren bekannt, welche die Erkennung sensorisch überwachter Betriebszustände offenbaren.

Aus dem Stand der Technik ist mit der DE 10 2009 021 130 A1 ein Geldautomaten bekannt, bei welchem die Datensätze aus Funktionssignalen von Aktoren und Sensoren ausgewertet und mit entsprechenden Funktionssignalen aus vorherigen Auswertezeitabständen verglichen werden, wobei die Vergleichsergebnisse mit Normwerten verglichen werden, bei deren Überschreitung eine Signalabgabe erfolgt. Als Funktionssignal eines Sensors ist die gemessene Schaltzeit einer Weiche zur Geldausgabe offenbart. Wenn aus einem Vergleich mit den früheren Schaltzeiten eine Tendenz zur Verlängerung der Schaltzeit erkennbar ist, so wird diese mit vorgegebenen Normgrößen verglichen. Ein Überschreiten der vorgegebenen Normgröße kann dann zu einem Warnsignal führen. Dem Gegenstand der DE 10 2009 021 130 A1 liegt die Auswertung eines sensorisch detektierten Betriebszustandes zugrunde.

Die US 2005/0043011 A1 offenbart ein System von Verkaufsautomaten, insbesondere Getränkeautomaten, welche über ein Drahtlosnetzwerk mit einem Hintergrundsystem verbunden sind, bei welchem System Transaktionsdaten oder auch Sensordaten wie insbesondere Temperatur, Stromausfälle oder der Status eines sensorisch überwachten Bauteils mit einer Kennzahl verglichen werden. Diese Kennzahl kann beispielsweise die Verkaufshäufigkeit eines "anderen Produktes" oder eines "anderen Getränkeautomaten" im Falle von damit verglichenen Transaktionsdaten oder im System hinterlegte Grenzwerte im Falle von Sensordaten sein. Auch bei diesem System ist lediglich die Detektierung von sensorisch überwachten Betriebszuständen möglich.

Die US 2005/0173515 A1 offenbart einen Geldautomaten, bei welchem ein außergewöhnlicher Betriebszustand, d. h. ein technischer Defekt, sensorisch ermittelt wird. Das Auftreten des außergewöhnlichen Betriebszustandes wird somit "klassisch" detektiert. In diesem Zusammenhang ist auch offenbart, dass die Häufigkeit des Auftretens eines Fehlers statistisch ausgewertet wird und gegebenenfalls zu weiteren Maßnahmen führt. Die Ermittlung außergewöhnlicher Betriebszustände von nicht sensorisch überwachten Baugruppen ist auch in dieser Druckschrift nicht bekannt.

Die US 2006/0289553 A1 betrifft einen Verkaufsautomaten für Getränke. Besagter Getränkeautomat zeichnet sich insbesondere durch ein Maschinenkontrollsystem zur Steuerung des Energieverbrauchs aus. Hierzu verfügt der Getränkeautomat über einen Temperatursensor, der verlaufsbezogene Temperaturdaten des Getränkeautomaten bei dessen Aufwärmung und Abkühlung liefert, sobald der eingebaute Kompressor in Betrieb ist. Aufgrund der erhaltenen Werte kann dann die Kühltemperatur des Getränkeautomaten in Abhängigkeit der verkauften Getränkemenge gesteuert werden.

Die WO 2009/109660 A1 betrifft einen über ein Drahtlosnetz mit einem Hintergrundsystem verbundenen Ausgabeautomaten für Bälle, welcher die ausgegebenen Bälle zählt und das Zählergebnis an das Hintergrundsystem sendet. Dort wird das Zählergebnis mit einer Kennzahl verglichen, welche sich aus Erfahrungswerten im Zusammenhang mit dem Betrieb solcher Ausgabeautomaten ergibt. Anhand der ausgegebenen Bälle kann auf einen anstehenden Ausfall eines Bauteils geschlossen werden, wenn sich aus der Historie z. B. bisher ergeben hat, dass besagtes Bauteil im Mittel nach einer bestimmten Anzahl von ausgegebenen Bällen ausfällt. Es handelt sich hiermit um ein Verfahren zur Detektion von gewöhnlichen, das heißt eingeplanten Betriebszuständen. Für eine Detektion außergewöhnlicher Betriebszustände ist dieses Verfahren hingegen nicht geeignet.

Die US 7,946,474 B1 offenbart ein System und ein Verfahren zur periodischen Befüllung eines Geldautomaten. Hierbei wird zunächst ein Erwartungswert für einen beliebigen Zeitabschnitt sowie ein oberer Grenzwert für die erwartete Entnahme innerhalb besagter Periode auf Basis einer Historie von Geldentnahmen berechnet. Anhand der Erwartungswerte können dann optimierte Zeitpunkte für die Auffüllung des Geldautomaten sowie eine optimierte Auffüllmenge für den jeweiligen Geldautomaten bestimmt werden. Die Erkennung außergewöhnlicher Betriebszustände oder eine sensorische Überwachung von Baugruppen ist mit dieser Druckschrift hingegen nicht offenbart. Eine Erkennung außergewöhnlicher Betriebszustände von nicht sensorisch überwachten Baugruppen ist somit nachteilhafterweise aus keiner der vorgenannten Dokumente bekannt.

Ausgehend vom vorbeschriebenen Stand der Technik ist es somit die **Aufgabe** der Erfindung, ein Verfahren bereitzustellen, das es ermöglicht, außergewöhnliche Betriebszustände an selbstbedienten Einrichtungen zu erkennen, auch dann, wenn die Ursache für den außergewöhnliche Betriebszustand nicht unmittelbar sensorisch überwacht werden kann.

Zur technischen **Lösung** dieser Aufgabe wird ein Verfahren mit den Merkmalen des Anspruchs 1 vorgeschlagen. Weitere Vorteile und Merkmale ergeben sich aus den Unteransprüchen.

Der Vorteil der Erfindung ist es, außergewöhnliche Betriebszustände in selbstbedienten Einrichtungen erkennen zu können, auch wenn diese außergewöhnlichen Betriebszustände keine unmittelbare technische Ursache haben oder diesen Zustand feststellende Sensoren nicht in den selbstbedienten Einrichtungen vorhanden sind.

Erfindungsgemäß wird hierbei ausgenutzt, dass eine selbstbediente Einrichtung aus verschiedenen Baugruppen besteht, die in einem Wirkzusammenhang zu einander stehen. Tritt nun ein außergewöhnlicher Betriebszustand an einer nicht sensorisch überwachten Baugruppe auf, so kann dieser außergewöhnliche Betriebszustand naturgemäß nicht unmittelbar an derselben Baugruppe festgestellt werden. Erfindungsgemäß wird der außergewöhnliche Betriebszustand nun dadurch erkannt, dass von wenigstens einer mit Sensoren versehenen Baugruppe, welche in Wirkzusammenhang mit der nicht sensorisch überwachten Baugruppe steht, wenigstens ein Sensorsignal gemessen und in digitale Sensordaten transformiert wird, diese Sensordaten zeitbezogen gespeichert, verdichtet und ausgewertet werden.

Sensorsignale sind dabei analoge Größen, welche von Sensoren (z.B. Kontaktschalter, Gewichts-, Wirbelstrom-, oder Induktivsensoren, Lichtschranken, Infrarot- oder Ultraviolettsensoren, etc.) gemessen werden.

Sensordaten sind digitale Datensätze, welche ein Digitalprozessor durch Interpretation der Signale ermittelt. Sensordaten sind insbesondere mit eine Zeitstempel versehen (Datum und Uhrzeit), welchen der Prozessor aus einem Uhrenbaustein ermittelt.

Eine Baugruppe ist dabei eine Einheit innerhalb der selbstbedienten Einrichtung, die im störungsfreien Betrieb der Einrichtung eine bestimmte Funktion erfüllt. Im Sinne der Erfindung kann eine Baugruppe eine sehr kleine Einheit sein, die nicht von einem Sensor überwacht wird - z.B. ein Münzschlitz in einem Verkaufsautomaten, dessen Funktion es ist, dass ein Kunde darin Münzen einwerfen kann. Im Sinn der Erfindung kann eine Baugruppe auch eine Einheit sein, die Sensoren aufweist - z.B. ein Münzprüfer, der eingeworfene Münzen auf Echtheit prüft und ihren Nennwert bestimmt. Eine Baugruppe, die zwar Sensoren aufweist, aber keinen eigenen Prozessor, gibt ausschließlich analoge Sensorsignale an einen diese Baugruppe kontrollierenden Rechner. Eine Baugruppe, die Sensoren und zusätzlich einen eigenen Prozessor aufweist, sendet digitale Sensordaten an einen diese Baugruppe kontrollierenden Rechner.

Diese Sensordaten werden zeitbezogen in einem Rechner gespeichert, das heißt, jeder Sensordatensatz hat einen Zeitstempel, der den Zeitpunkt (Datum und Uhrzeit) angibt, an dem der Sensordatensatz ermittelt wurde. Einzelne Sensordatensätze werden in den entsprechenden Baugruppen ermittelt und an den Rechner übermittelt, oder der Rechner erhält Sensorsignale von solchen Baugruppen, die keinen eigenen Prozessor haben, und transformiert diese Signale in Sensordaten mit Zeitstempel. Dieser Rechner kann ein lokaler Rechner sein, das heißt, ein Rechner, der Bestandteil der selbstbedienten Einrichtung ist und deren Betrieb steuert und überwacht. Dieser Rechner kann vorzugsweise auch ein Zentralrechner sein, der eine Vielzahl von selbstbedienten Einrichtungen überwacht, mit Betriebsdaten versorgt und Vorgangsdaten von ihnen empfängt. Dazu ist der Zentralrechner mit der Vielzahl von selbstbedienten Einrichtungen über ein Datennetzwerk verbunden. Betriebsdaten sind dabei datentechnisch notierte Einstellungen, die die selbstbediente Einrichtung zu ihrem bestimmungsgemäßen Betrieb braucht. Vorgangsdaten sind solche Daten, die die selbstbediente Einrichtung im Betrieb generiert - z.B. Datensätze über Verkäufe und insbesondere auch Sensordaten aus sensorisch überwachten Baugruppen.

Vorzugsweise unabhängig vom Ort des Rechners (lokal als Bestandteil der selbstbedienten Einrichtung oder zentral), empfängt der Rechner Sensorsignale oder Sensordatensätze von allen sensorisch überwachten Baugruppen der selbstbedienten Einrichtung.

Das Übermitteln und Empfangen von Sensorsignalen oder Sensordatensätzen kann dabei unterschiedlich gesteuert sein: Sie können vorzugsweise spontan gesendet werden, sobald der Sensor einen bestimmten Messwert oder eine Zustandsänderung feststellt. Insbesondere hat ein Verkaufsautomat einen Türsensor, der beim Öffnen der Tür einen elektrischen Kontakt öffnet oder schließt. Dieses elektrische Sensorsignal wird abgegriffen und über eine Schnittstelle an den Rechner des Automaten gegeben. Der Rechner generiert und speichert darauf hin einen digitalen Sensordatensatz "Tür wurde geöffnet". Bestandteil dieses Datensatzes ist ein Zeitstempel (Datum und Uhrzeit), welchen der Rechner mittels seiner Uhr generiert. Sensorsignale oder Sensordatensätze können jedoch auch periodisch an einen Rechner gesendet werden, also in einstellbaren Zeitintervallen. Insbesondere kann der Pegel eines Kraftstofftanks, der von einem Tankpegelsensor gemessen wird, alle 15 Minuten an einen Rechner gesendet werden. Sensordatensätze, welche aus Sensorsignalen generiert sind, können vorzugsweise in weiteren Datensätzen enthalten sein. Insbesondere enthalten Transaktionsdatensätze von Verkaufsautomaten detaillierte sensorisch erfasste Daten zu Anzahl und Typen der eingesetzten Zahlmittel (Münzen, Banknoten oder Zahlungskarten). Diese Daten haben ihren Ursprung in den Sensoren, die in entsprechenden Baugruppen des Automaten (Münzverarbeitungs-, Banknotenverarbeitungs- und Kartenverarbeitungsbaugruppe) verwendet werden. Diese auf Sensorsignalen basierenden Transaktionsdatensätze können spontan an einen Rechner gesendet werden, insbesondere kann ein Automat einen Transaktionsdatensatz nach jedem Verkaufsvorgang an einen Zentralrechner senden. Transaktionsdatensätze können aber auch in der selbstbedienten Einrichtung gesammelt werden und dann kollektiv als sogenannte Schichtdaten an einen Zentralrechner gesendet werden. Das Senden von Schichtdaten kann dabei zeitgesteuert sein (z.B. sende jeden Tag um 23:59 Uhr) oder ereignisgesteuert (z.B. sende Schichtdaten, sobald die Kassenbehälter getauscht werden).

Erfindungsgemäß entscheidend ist, dass die digitalen Sensordaten wie erwähnt auf Basis analoger Sensorsignale zeitbezogen generiert und gespeichert werden, das heißt, jeder Sensordatensatz hat einen Zeitstempel, der den Zeitpunkt (Datum und Uhrzeit) angibt, an dem der Sensordatensatz generiert wurde. Der Rechner, in dem die Sensordaten ausgewertet werden, ermittelt aus den Sensordaten wenigstens eine zeitbezogene Kennzahl oder vorzugsweise einen mehrdimensionalen Merkmalsvektor, der charakteristisch ist für den Betriebszustand der vom Sensor überwachten Baugruppe. Jene Kennzahlen, die aus dem störungsfreien Betrieb der selbstbedienten Einrichtung ermittelt werden, werden als Referenzwert gespeichert, wobei ein Referenzwert auch ein mehrdimensionaler Vektor sein kann. Um eine zeitnahe Feststellung von außergewöhnlichen Betriebszuständen feststellen zu können, werden Kennzahlen und Referenzwerte bevorzugt auf einen Tag oder einige Stunden bezogen, zum Beispiel: es werden an einem Verkaufsautomaten im störungsfreien Betrieb 120 Verkaufstransaktionen pro Tag durchgeführt, bei denen mit Münzen bezahlt wird. Als Kennzahlen werden in diesem Zusammenhang und im Folgenden beispielsweise (aber nicht ausschließlich) die Anzahl/Häufigkeiten zeitlicher Änderung des Sensorausgangs betrachtet.

Die Referenzwerte sind dabei typischerweise für jede individuelle selbstbediente Einrichtung unterschiedlich, da typischerweise jedes Individuum andere Standortbedingungen mit anderem Publikumsverkehr hat. Die Referenzwerte können darüber hinaus kalendarisch unterschiedliche Werte aufweisen. Zum Beispiel ist es typisch für Fahrausweisautomaten, dass an den Tagen um den Monatswechsel mehr Verkaufstransaktionen auftreten als sonst im Tagesmittel, da die Kunden sich neue Monatskarten kaufen. Gemäß einer bevorzugten Ausgestaltung der Erfindung können daher kalendarisch unterschiedliche Referenzwerte ermittelt und gespeichert werden. Kalendarische Parameter können sein: Tag des Monats, Wochentag, feste oder bewegliche Feiertage, Schulferien und lokale oder regionale Großereignisse wie Volksfeste oder Fachmessen. Des Weiteren können die Referenzwerte auf Basis sensorisch erfasster IST-Informationen vorzugsweise dynamisch angepasst/optimiert werden.

Es wird nun für eine andere, nicht sensorisch überwachte Baugruppe, die jedoch mit der überwachten Baugruppe in einem Wirkzusammenhang steht, aktuell ein außergewöhnlicher Betriebszustand festgestellt, wenn die aktuelle Kennzahl der überwachten Baugruppe um mehr als einen Schwellwert von dem zuvor festgestellten Referenzwert abweicht. Der Schwellwert ist dabei ein in den Betriebsdaten einstellbarer Parameter, der dafür sorgt, dass nicht bereits kleine Abweichungen von der erwarteten Kennzahl auf einen außergewöhnlichen Betriebszustand schließen lassen.

Insbesondere kann dies am Beispiel eines Verkaufsautomaten verdeutlicht werden. Im störungsfreien Betrieb des Verkaufsautomaten werden an einem ersten Montag im Monat 120 Verkaufstransaktionen pro Tag durchgeführt, bei denen mit Münzen bezahlt wird. Das aktuelle Datum ist ein erster Montag im Monat, es ist 17:00 Uhr, und es sind erst 10 Verkaufstransaktionen mit Münzen bezahlt worden, ob wohl die Münzverarbeitungsbaugruppe selbst keinen Fehler meldet. Das erfindungsgemäße Verfahren kommt zu dem Schluss, dass der Münzschlitz, der von keinem Sensor überwacht wird, vermutlich verstopft oder zugeklebt worden ist. Es wird also aus den Sensorsignalen (von z.B. Gewichts-, Wirbelstrom-, oder Induktivsensoren) einer Baugruppe - hier: Münzverarbeitungsbaugruppe - auf den außergewöhnlicher Betriebszustand einer nicht sensorisch überwachten Baugruppe - hier: Münzschlitz-geschlossen.

Die Auswertung der Sensordaten kann gemäß einem bevorzugten Merkmal der Erfindung in einem Rechner erfolgen, der lokal als Bestandteil der selbstbedienten Einrichtung angeordnet ist und der den Betrieb dieser Einrichtung steuert. Vorzugsweise kann ein solcher Rechner basierend auf der festgestellten Abweichung Folgemaßnahmen einleiten. Wenn zum Beispiel festgestellt wird, dass in einem Verkaufsautomaten der Münzschlitz verstopft oder zugeklebt ist, kann der lokale Rechner ein Signal setzen, dass das Kundeninterface anzeigt, dass der Automat zurzeit keine Münzen annimmt. Gleichzeitig kann der lokale Rechner eine entsprechende Fehlermeldung an einen zugehörigen Zentralrechner senden, so dass der außergewöhnliche Betriebszustand in einer zentralen Betriebsführungsanlage bekannt ist und ein Servicetechniker zum Automaten gesandt werden kann.

Im Rahmen einer bevorzugten Ausgestaltung der Erfindung kann vorgesehen sein, dass die erfassten Sensorsignale direkt in der überwachten Baugruppe als Sensordaten gespeichert und ausgewertet werden. Dies ist dann möglich, wenn die überwachte Baugruppe über einen eigenen Prozessor und einen Datenspeicher verfügt, der den Vergleich zwischen sensorbasierten Kennzahlen und Referenzdaten ermöglicht. Zum Beispiel kann eine Banknotenverarbeitungsbaugruppe sich selbst mit einem erfindungsgemäßen Verfahren überwachen.

Die Auswertung der Sensordaten kann vorzugsweise in einem Zentralrechner erfolgen, der eine Vielzahl von selbstbedienten Einrichtungen überwacht, mit Betriebsdaten versorgt und sensorisch basierte Vorgangsdaten von ihnen empfängt. Vorzugsweise kann ein auch solcher Zentralrechner basierend auf der festgestellten Abweichung Folgemaßnahmen einleiten. Wenn zum Beispiel festgestellt wird, dass in einem Verkaufsautomaten der Münzschlitz verstopft oder zugeklebt ist, kann der Zentralrechner diesen außergewöhnlichen Betriebszustand zusammen mit den ermittelten Sensordaten in einer zentralen Leitstelle zur Anzeige bringen, so dass ein Servicetechniker zum Automaten gesandt werden kann.

Die Sensordaten, Kennzahlen, Referenzwerte und Schwellwerte werden gemäß einer bevorzugten Ausführungsform der Erfindung in wenigstens einer Datenbank gespeichert.

Die Daten zwischen der selbstbedienten Einrichtung und dem Rechner können im Rahmen des erfindungsgemäßen Verfahrens auf vielfältige Weise übermittelt werden. Insbesondere kann dies über drahtgebundene Datennetzwerke oder über drahtlose Datennetzwerke erfolgen. Bevorzugt erfolgt die Datenübertragung auf dem TCP/IP Datenprotokoll. Als drahtlose Netzwerke kommen insbesondere WLAN, Bluetooth, GSM, 3G- oder 4G-Funknetze in Frage wie auch weitere drahtlose Netzwerktechnologien, wie sie zukünftig verfügbar sein können.

Im Folgenden wird die Erfindung anhand von nicht einschränkend zu verstehenden Ausführungsbeispielen näher erläutert. Hierbei zeigen:
- Fig 1:: einen Verkaufsautomaten gemäß der Erfindung in der Außenansicht
- Fig 2:: den Verkaufsautomaten mit sensorüberwachten Baugruppen und solchen Baugruppen, die nicht sensorüberwacht sind, und die datenmäßige Anbindung des Automaten an einen Zentralrechner gemäß der Erfindung.

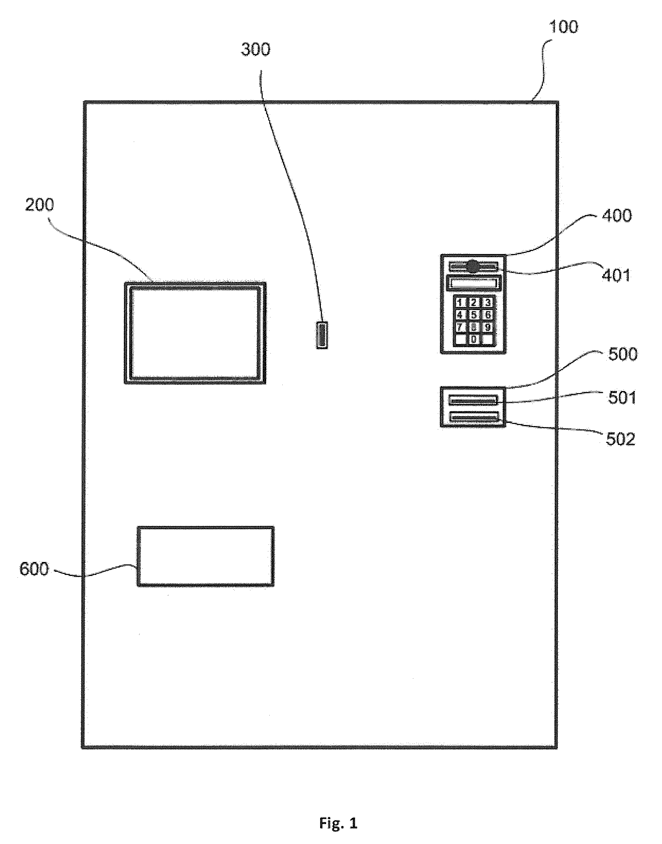

Figur 1 zeigt einen Verkaufsautomaten 100 in der Außenansicht. Der Automat kann vom Kunden über die folgenden Bedienungsbaugruppen bedient werden: einen berührungsempfindlichen Bildschirm 200, einen Münzschlitz 300 zum Einwurf von Münzen, ein Kartenterminal 400 mit einem Kartenschlitz 401, eine Banknotenverarbeitung 500 mit einem Banknotenannahmeschlitz 501 und einem Banknotenausgabeschlitz 502 sowie über eine Ausgabeklappe 600, hinter der ein Kunde ausgegebene Waren und zurückgegebene Münzen entnehmen kann. Keine dieser Baugruppen verfügt über einen Sensor, welcher einen außergewöhnlichen Betriebszustand detektieren könnte.

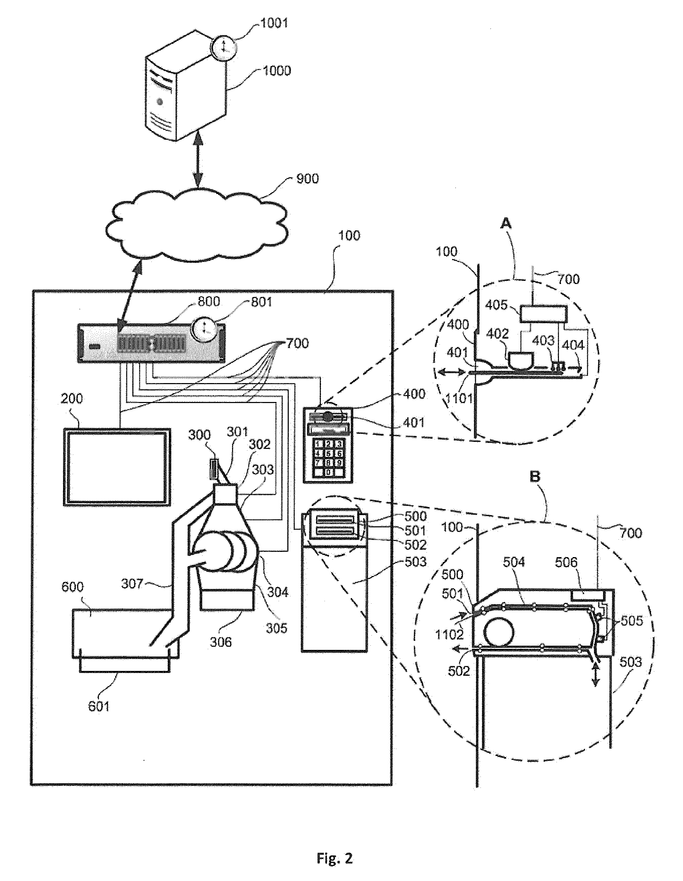

Figur 2 zeigt den Automaten 100 mit sensorüberwachten Baugruppen, welche in einem Wirkzusammenhang mit den nicht überwachten Bedienungsbaugruppen stehen.

Der Münzschlitz 300 ist verbunden mit einem Münzkanal 301, durch welchen eine eingeworfene Münze in einen Münzprüfer 302 fällt. Der Münzprüfer 302 hat einen oder mehrere Sensoren, welche die Münze erkennen und bewerten, also falsche von echten Münzen unterscheiden und den echten Münzen ihren Wert zuordnen. Als echt geprüfte Münzen werden vom Münzverteiler 303 gemäß ihrem Nennwert auf Münzspeicher 304 verteilt, so dass in jedem Münzspeicher 304 genau ein Münznennwert vorgehalten wird. Münzen, die als Wechselgeld ausgegeben werden, werden aus dem Münzspeicher 304 über einen Münzrückgabekanal 307 in eine Ausgabeschale 601 geleitet. Ebenso werden vom Münzprüfer 302 abgewiesene Münzen über den Münzrückgabekanal 307 direkt in die Ausgabeschale 601 geleitet. Der Kunde kann also abgewiesene bzw. als Wechselgeld ausgegebene Münzen durch die Ausgabeklappe 600 entnehmen.

Dabei sind der Münzschlitz 300, Ausgabeklappe 600 und Ausgabeschale 601 keine von Sensoren überwachten Baugruppen. Die weiteren Baugruppen der Münzverarbeitungsbaugruppe sind jedoch sehr wohl mit Sensoren ausgestattet - hier speziell Münzprüfer 302, Münzverteiler 303, Münzspeicher 304 - und stehen mit den nicht überwachten Baugruppen Münzschlitz 300 und Ausgabeschale 601 in einem direkten Wirkzusammenhang. Wenn eine Münze durch den Münzschlitz 300 eingeworfen wird, dann detektieren das wenigstens einige Sensoren, wie insbesondere Lichtschranken, Gewichtssensoren, Kameras, Wirbelstromsensoren, etc., der genannten Baugruppen und liefern entsprechende Sensorsignale über Datenverbindungen 700 an den Rechner 800. Dieser Rechner 800 ist mit einem Uhrenbaustein 801 versehen, so dass jedes Sensorsignal mit einem Zeitstempel (Datum und Uhrzeit) versehen und als Sensordatensatz digital gespeichert wird. Wenn nun für eine bestimmte Zeitdauer keine neuen Sensordatensätze mehr speichert werden, weil die Sensorsignale ausbleiben, obwohl die Münzverarbeitungsbaugruppe selbst keinen Fehler meldet, dann erkennt der Rechner 800 eine Abweichung zwischen den aktuellen Kennzahlen (der aktuellen Häufigkeit der Sensorsignale aus Münzverarbeitungsbaugruppe) und den zuvor ermittelten Referenzwerten. Wenn diese Abweichung wenigstens einen Schwellwert übersteigt, wertet der Rechner 800 dies erfindungsgemäß als einen außergewöhnlichen Betriebszustand des Münzschlitzes 300. Der Rechner nimmt dann die Münzverarbeitungsbaugruppe außer Betrieb und signalisiert dem Kunden über den Bildschirm 200, dass der Automat zurzeit keine Münzen annehmen kann.

Ähnlich verhält es sich mit dem Kartenterminal 400. Figur 2, Vergrößerung A, zeigt den prinzipiellen Aufbau der Kartenleseeinrichtung in der Seitenansicht. Wenn ein Kunde eine Kartenzahlung durchführen möchte, dann führt er in das Kartenterminal 400 durch den Kartenschlitz 401 eine Bank- oder Kreditkarte 1101 ein. Der Magnetstreifen der Karte 1101 bewegt sich dabei am Magnetlesekopf 402 vorbei, welcher die Kartendaten vom Magnetstreifen liest und an einen Prozessor 405 weitergibt. Wird die Karte 1101 ganz eingeschoben, wird ein Kartensensor 404 betätigt, so dass sich die Chip-Kontakte 403 auf den Datenchip der Karte 1101 absenken und die Kartendaten aus dem Chip auslesen. Die Chip-Kontakte geben anschließend die Kartendaten an einen Prozessor 405. Der Prozessor 405 verarbeitet die von Magnetlesekopf 402 und von den Chip-Kontakten 403 erhaltenen Kartendaten, so dass sie - in der Regel verschlüsselt - dem Rechner 800 über eine Datenverbindung 700 zur Verfügung stehen. Auch beim Kartenterminal 400 ist es so, dass der Kartenschlitz 401 nicht sensorisch überwacht wird. Jedoch kann der Rechner 800 durch eine aktuelle Kennzahl, die aus den Sensorsignalen des Kartenterminals ermittelt wird, auf einen außergewöhnlichen Betriebszustand des Kartenschlitzes 401 schließen und das Kartenterminal 400 außer betrieb nehmen, falls die Kennzahl um mehr als einen Schwellwert von einem Referenzwert abweicht.

Analog verhält es sich mit der Banknotenverarbeitung 500. Figur 2, Vergrößerung B, zeigt den prinzipiellen Aufbau der Banknotenverarbeitung in der Seitenansicht. Will der Kunde mit Banknoten zahlen, so führt er die Banknoten 1102 einzeln nacheinander in die Banknotenverarbeitung 500 durch den Banknotenannahmeschlitz 501 ein. Die Bannknote 1102 wird dabei von einem nicht näher gezeigten Führungsmechanismus in die Banknotenverarbeitung 500 eingezogen und an einem oder mehreren Banknotenprüfungssensoren 505 vorbeigeführt. Das Signal dieser Sensoren (z.B. optoelektronische Sensoren unterschiedlicher Spektralbereiche und Magnetsensoren) wird von einem Prozessor 506 ausgewertet, welcher die Banknote 1102 als echt oder unecht bewertet und, falls echt, den Nennwert der Banknote 1102 bestimmt. Als echt akzeptierte Banknoten 1102 werden in die Banknotenkasse 503 geführt; zurückgewiesene Banknoten 1102 werden durch den Banknotenrückgabeschlitz 502 an den Kunden zurückgegeben. Die Sensordaten, welche die Banknotenverarbeitung selbsttätig aus den Sensorsignalen ermittelt, werden dem Rechner 800 über eine Datenverbindung 700 zur Verfügung gestellt. Auch bei der Banknotenverarbeitung 500 ist es so, dass der Banknotenannahmeschlitz 501 nicht direkt sensorisch überwacht wird. Jedoch kann der Rechner 800 durch eine aktuelle Kennzahl, die aus den Sensordaten der Banknotenverarbeitung ermittelt wird auf einen außergewöhnlichen Betriebszustand des Banknotenannahmeschlitzes 501 schließen und die Banknotenverarbeitung 500 außer Betrieb nehmen, falls die Kennzahl um mehr als einen definierten Schwellwert von einem Referenzwert abweicht.

Die Ermittlung von aktuellen Sensorkennzahlen und der Vergleich mit Referenzwerten kann dabei im lokalen Rechner 800 des Verkaufsautomaten erfolgen oder im Zentralrechner 1000, der natürlich auch über einen Uhrenbaustein 1001 verfügt und zeitbezogene Kennzahlen und Referenzwerten vergleichen kann. Der Zentralrechner 1000 überwacht dabei eine Vielzahl von Automaten 100, versorgt diese mit Betriebsdaten und empfängt Vorgangsdaten von diesen. Dazu ist der Zentralrechner 1000 mit dieser Vielzahl von Automaten 100 über ein Netzwerk 900 datentechnisch verbunden.

### Bezugszeichen

- 100: Verkaufsautomat
- 200: Berührungsempfindlicher Bildschirm
- 300: Münzschlitz
- 301: Münzkanal
- 302: Münzprüfer
- 303: Münzverteiler
- 304: Münzspeicher
- 305: Überlauf
- 306: Münzkasse
- 307: Münzrückgabekanal
- 400: Kartenterminal
- 401: Kartenschlitz
- 402: Magnetlesekopf
- 403: Chip-Kontakte
- 404: Kartensensor
- 405: Prozessor
- 500: Banknotenverarbeitung
- 501: Banknotenannahmeschlitz
- 502: Banknotenrückgabeschlitz
- 503: Banknotenkasse
- 504: Banknotentransportmechanismus
- 505: Banknotenprüfsensoren
- 506: Prozessor
- 600: Ausgabeklappe
- 601: Ausgabeschale
- 700: Datenverbindungen
- 800: Rechner
- 801: Uhrenbaustein
- 900: Netzwerk
- 1000: Zentralrechner
- 1001: Uhrenbaustein
- 1101: Bank- oder Kreditkarte
- 1102: Banknote

## Patentansprüche

1. Verfahren zur Erkennung außergewöhnlicher Betriebszustände einer sensorisch nicht überwachten ersten Baugruppe in einer selbstbedienten Einrichtung, mittels einer Sensorik, einer mit der ersten Baugruppe in einem Wirkzusammenhang stehenden zweiten Baugruppe und mittels eines Rechners,
- wobei Sensorsignale der zweiten Baugruppe gemessen und in digitale Sensordaten transformiert werden,
- wobei die Sensordaten zeitbezogen gespeichert werden,
- wobei die Sensordaten an den Rechner übermittelt werden,
- wobei der Rechner die übermittelten Sensordaten auswertet und daraus wenigstens eine Kennzahl für den Betriebszustand der überwachten, zweiten Baugruppe ermittelt,
- wobei der Rechner die Kennzahl der überwachten, zweiten Baugruppe mit einem Referenzwert vergleicht und
- wobei der Rechner bei einer Abweichung der Kennzahl von dem Referenzwert um wenigstens einen vorgebbaren Schwellwert einen außergewöhnlichen Betriebszustand der nicht überwachten, zweiten Baugruppe feststellt.

2. Verfahren nach einem der vorhergehenden Ansprüche, **dadurch gekennzeichnet, dass** der Rechner basierend auf der festgestellten Abweichung Folgemaßnahmen einleitet.

3. Verfahren nach einem der vorhergehenden Ansprüche, **dadurch gekennzeichnet, dass** eine Vielzahl von selbstbedienten Einrichtungen mit dem Rechner verbunden werden, wobei dieser als Zentralrechner eingesetzt wird.

4. Verfahren nach einem der vorhergehenden Ansprüche, **dadurch gekennzeichnet, dass** die zweite Baugruppe ihre Sensorsignale mittels eines baugruppenseitigen Prozessors und Datenspeichers in Sensordaten transformiert, speichert und auswertet.

5. Verfahren nach einem der vorhergehenden Ansprüche, **dadurch gekennzeichnet, dass** die Sensordaten einrichtungsseitig mittels eines einrichtungsseitigen Rechners erfasst werden.

6. Verfahren nach einem der vorhergehenden Ansprüche, **dadurch gekennzeichnet, dass** die Sensordaten, Kennzahlen, Referenzwerte und Schwellwerte in einer Datenbank gespeichert werden.

7. Verfahren nach einem der vorhergehenden Ansprüche, **dadurch gekennzeichnet, dass** die Kennzahlen aus Transaktionsdaten ermittelt werden.

8. Verfahren nach einem der vorhergehenden Ansprüche, **dadurch gekennzeichnet, dass** die Übermittlung der Daten zwischen selbstbedienten Einrichtungen und Rechner drahtlos durchgeführt wird.
